# EUROPÄISCHE PATENTANMELDUNG

(11) **EP 1 881 397 A2**
(43) Veröffentlichungstag der Anmeldung: **23.01.2008**
(21) Anmeldenummer: 07013070.3
(22) Anmeldetag: 04.07.2007
(51) Int. Cl.: G06F 3/048, G06F 3/02, H01H 13/702

(54) **Tastatur**

(30) Priorität: 22.07.2006 DE 202006011302 U
(71) Anmelder: Hoffmann + Krippner GmbH, 74722 Buchen (DE)
(72) Erfinder: Berres, Stefan, 74731 Walldürn (DE)
(74) Vertreter: Meyer-Roedern, Giso

(57) **Zusammenfassung**

Die Tastatur hat eine äußeren Folie (14), die sich gegen einen Betätigungswiderstand niederdrücken läßt, um einen lokalen elektrischen Kontakt zu schließen, und eine Auswerteelektronik zur Erfassung des Orts der Niederdrückstelle und der wirkenden Niederdrückkraft. Die Auswerteelektronik läßt sich hinsichtlich der Zuordnung bestimmter Niederdrückstellen zu jeweiligen Tastenbetätigungsfunktionen und hinsichtlich der Schaltschwelle frei programmieren. Sie ist an den vorgenannten Niederdrückstellen für den Anwender unveränderlich fest programmiert. Die Tastatur weist eine die Niederdrückstellen identifizierende fühlbare Kennung auf.

## Beschreibung

Die Erfindung betrifft eine Tastatur mit einer äußeren Folie, die gegen einen Betätigungswiderstand niederdrückbar ist, um einen lokalen elektrischen Kontakt zu schließen, mit einer Auswerteelektronik zur Erfassung des Orts einer Niederdrückstelle und der wirkenden Niederdrückkraft.

Derartige Tastaturen sind in Form von Folientastaturen aus der Praxis bekannt.

Aufgabe der Erfindung ist es, eine Tastatur der genannten Art zu schaffen, die auf einem universell verwendbaren modularen Kern basiert.

Bei der diese Aufgabe lösenden Tastatur ist die Auswerteelektronik hinsichtlich der Zuordnung bestimmter Niederdrückstellen zu jeweiligen Tastenbetätigungsfunktionen frei programmierbar und für den Anwender unveränderlich fest programmiert. Die Auswerteelektronik ist hinsichtlich der Schaltschwelle, nämlich der Mindestniederdrückkraft für eine erfolgreiche Tastenbetätigung, ausgehend von einem konstruktiv vorgegebenen Minimum im Sinn einer Erhöhung der Schaltschwelle frei programmierbar und an den vorgenannten Niederdrückstellen für den Anwender unveränderlich fest programmiert. Die Tastatur weist eine die Niederdrückstellen identifizierende fühlbare Kennung auf.

Bei einer bevorzugten Ausführungsform sind Teil der Kennung Erhebungen an der Betätigungsseite der Folie, die geprägt, aufgegossen oder aufgeklebt sein können. Vorzugsweise handelt es sich bei den Erhebungen um ballige Kuppen.

Bei einer bevorzugten Ausführungsform sind Teil der Kennung Einbuchtungen an der Betätigungsseite der Folie, die geprägt sein können.

Bei einer bevorzugten Ausführungsform liegen den Erhebungen oder Einbuchtungen an der Betätigungsseite der Folie Stößel an der anderen Seite der Folie gegenüber, die geprägt, aufgegossen oder aufgeklebt sein können.

Bei einer bevorzugten Ausführungsform ist die Tastatur mit einer Designfolie versehen, die die Erhebungen und/oder Einbuchtungen und/oder Stößel aufweist.

Bei einer bevorzugten Ausführungsform ist Teil der Kennung wenigstens ein hardwaremäßig installierter Rückmeldungsgeber, der dem Anmelder eine erfolgreiche Tastenbetätigung taktil und/oder optisch und/oder akustisch signalisiert.

Bei einer bevorzugten Ausführungsform ist die Intensität der taktilen und/oder optischen und/oder akustischen Rückmeldung frei programmierbar und für den Anwender unveränderlich fest programmiert.

Bei einer bevorzugten Ausführungsform ist Teil des Rückmeldungsgebers eine Schnappscheibe, wie sie von einem als Knackfrosch bezeichneten Kinderspielzeug her bekannt ist.

Bei einer bevorzugten Ausführungsform ist Teil des Rückmeldungsgebers ein Vibrationselement.

Bei einer bevorzugten Ausführungsform ist in die Tastatur ein Fingerpad integriert. Die Auswerteelektronik ist hinsichtlich der Zuordnung bestimmter Niederdrückstellen zu Positionssignalgaben auf dem Fingerpad frei programmierbar und für den Anwender unveränderlich fest programmiert .

Bei einer bevorzugten Ausführungsform ist die Auswerteelektronik hinsichtlich der Schaltschwelle, nämlich der Mindestniederdrückkraft für eine erfolgreiche Positionssignalgabe auf dem Fingerpad, ausgehend von einem konstruktiv vorgegebenen Minimum im Sinn einer Erhöhung der Schaltschwelle frei programmierbar und für den Anwender unveränderlich fest programmiert.

Bei einer bevorzugten Ausführungsform ist die Folie an der Innenseite elektrisch leitend. Sie liegt einem Kontaktiermedium mit Abstand gegenüber. Bei dem Kontaktiermedium kann es sich um eine Leiterplatte oder um eine zweite elektrisch leitende Folie handeln.

Bei einer bevorzugten Ausführungsform befindet sich zwischen den Folien wenigstens ein Abstandshalter. Die Folien können sowohl transparent, als auch opak sein.

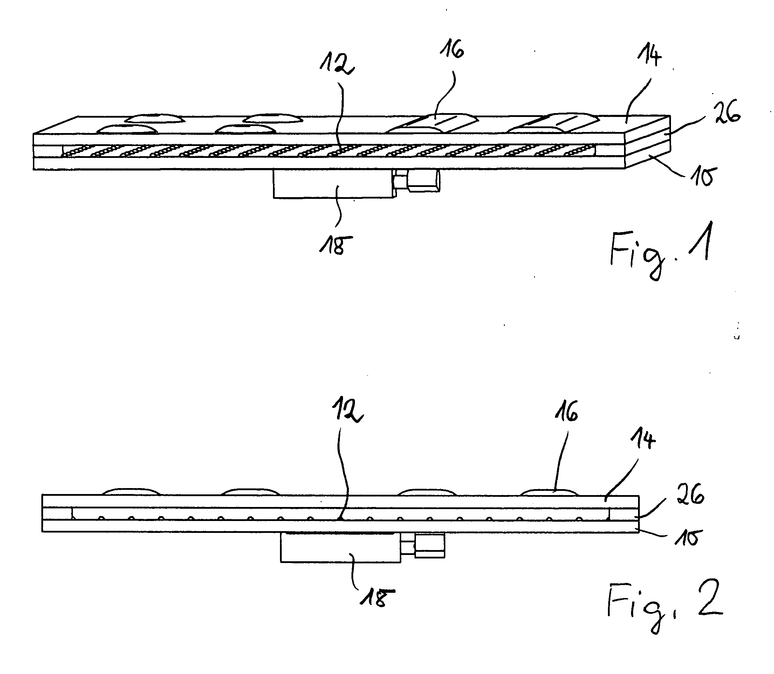

Die Erfindung wird im folgenden anhand von sechs in der Zeichnung dargestellten Ausführungsbeispielen näher erläutert. Gezeigt sind Tastaturen teils in perspektivischer Ansicht (Fig. 1, Fig. 3, Fig. 5, Fig. 7), teils in Seitenansicht (Fig. 2, Fig. 4, Fig. 6, Fig. 8, Fig. 9).

Die Tastatur gemäß Fig. 1 und Fig. 2 weist eine untere Kontaktfolie 10, Abstandshalter 12 und eine obere Kontaktfolie 14 auf. Die Folien sind am Rand mittels einer Fixierung 26 verbunden, die sie an Ort und Stelle hält.

Die Abstandshalter 12 sind auf die untere Kontaktfolie 10 aufgedruckte Punkte. Verteilung und Größe, insbesondere Höhe der Punkte bestimmen eine vorgegebene Mindestniederdrückkraft für eine erfolgreiche Tastenbetätigung. Die Tastatur hat also eine konstruktiv vorgegebene untere Schaltschwelle, die durch Programmierung einer Auswerteelektronik angehoben werden kann.

Die obere Kontaktfolie 14 weist an der Außenseite fühlbare Erhebungen 16 auf, die Niederdrückstellen markieren. Unter der unteren Kontaktfolie 10 sitzt ein Vibrationselement 18.

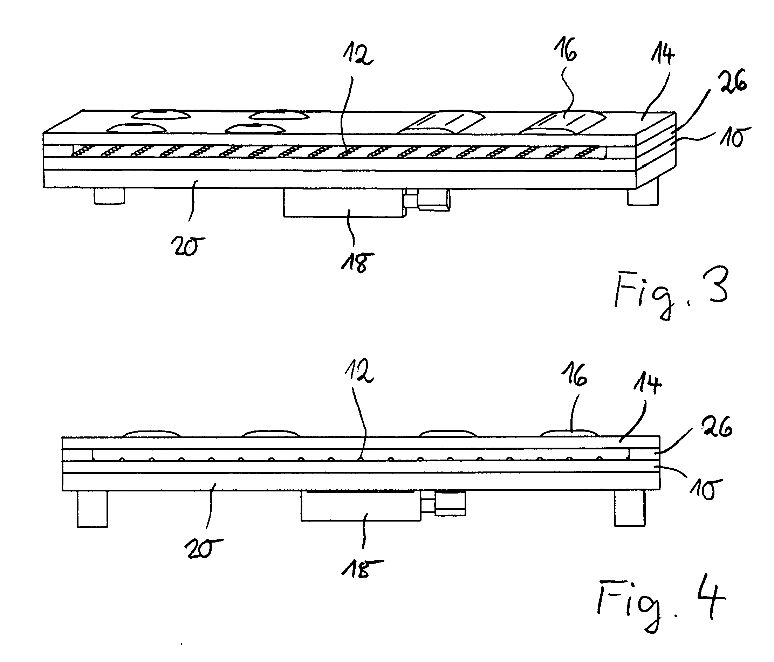

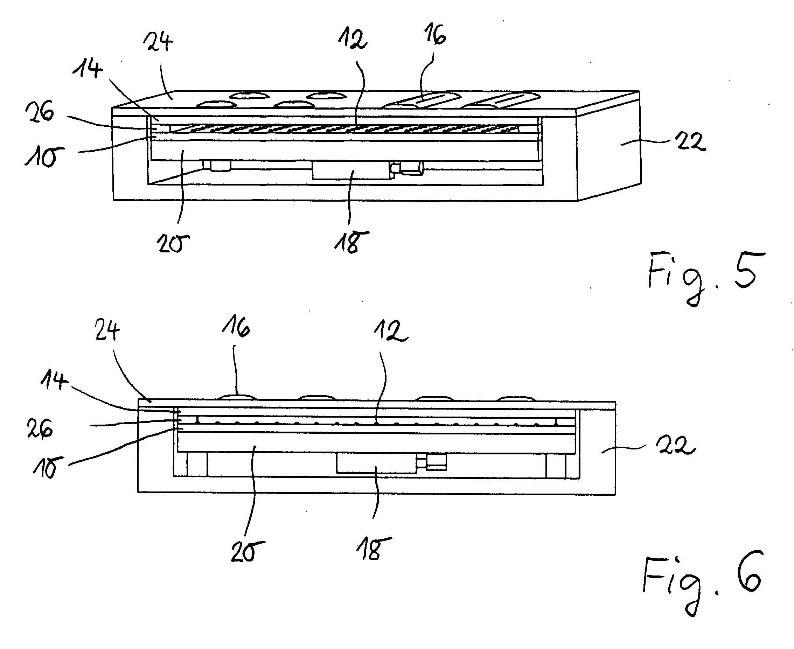

Bei Fig. 3 und Fig. 4 belegt die untere Kontaktfolie 10 ein plattenförmiges Trägerteil 20. Das Vibrationselement 18 sitzt unter dem Trägerteil 20.

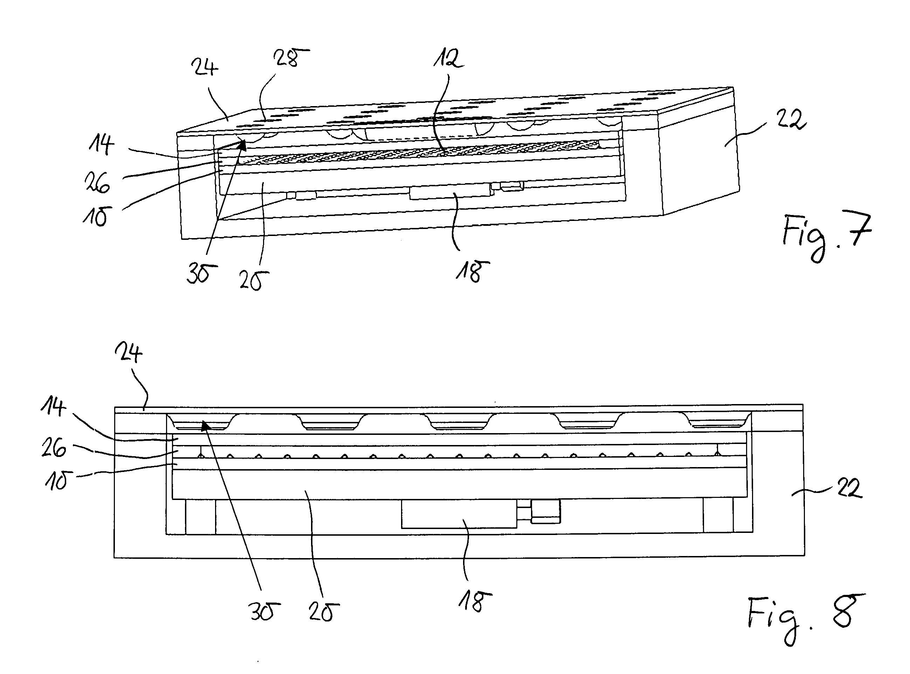

Bei Fig. 5 und Fig. 6 ist das Trägerteil 20 mit den Kontaktfolien 10, 14 in ein Gehäuse 22 eingebaut. Die obere Kontaktfolie 14 ist mit einer Designfolie 24 belegt, die an der Außenseite Niederdrückstellen markierende Erhebungen 16 trägt. Die Designfolie 24 kann mit der oberen Kontaktfolie 14 verklebt sein.

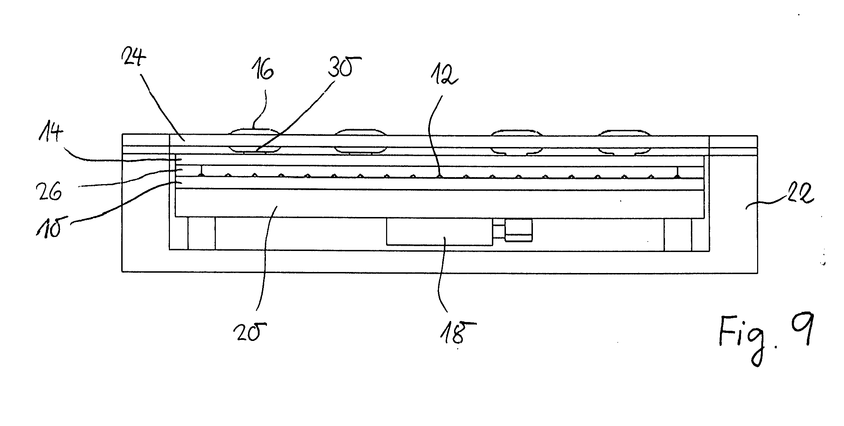

Bei Fig. 7 und Fig. 8 ist die Designfolie 24 mit eingeprägten Einbuchtungen 28 versehen, die Niederdrückstellen markieren. Den Einbuchtungen 28 liegen ausgeprägte Stößel 30 gegenüber.

Bei Fig. 9 trägt die Designfolie 24 an der Außenseite Niederdrückstellen markierende Erhebungen 16 und an der Innenseite den Erhebungen 16 gegenüberliegende Stößel 30.

### Liste der Bezugszeichen

- 10: untere Kontaktfolie
- 12: Abstandshalter
- 14: obere Kontaktfolie
- 16: Erhebung
- 18: Vibrationselement
- 20: Trägerteil
- 22: Gehäuse
- 24: Designfolie
- 26: Fixierung
- 28: Einbuchtung
- 30: Stößel

## Patentansprüche

1. Tastatur mit einer äußeren Folie, die gegen einen Betätigungswiderstand niederdrückbar ist, um einen lokalen elektrischen Kontakt zu schließen, mit einer Auswerteelektronik zur Erfassung des Orts einer Niederdrückstelle und der wirkenden Niederdrückkraft, **dadurch gekennzeichnet, daß** die Auswerteelektronik hinsichtlich der Zuordnung bestimmter Niederdrückstellen zu jeweiligen Tastenbetätigungsfunktionen frei programmierbar und für den Anwender unveränderlich fest programmiert ist, daß die Auswerteelektronik hinsichtlich der Schaltschwelle, nämlich der Mindestniederdrückkraft für eine erfolgreiche Tastenbetätigung, ausgehend von einem konstruktiv vorgegebenen Minimum im Sinn einer Erhöhung der Schaltschwelle frei programmierbar und an den vorgenannten Niederdrückstellen für den Anwender unveränderlich fest programmiert ist, und daß die Tastatur eine die Niederdrückstellen identifizierende fühlbare Kennung aufweist.

2. Tastatur nach Anspruch 1, **dadurch gekennzeichnet, daß** Teil der Kennung Erhebungen (16) an der Betätigungsseite der Folie (14) sind, die geprägt, aufgegossen oder aufgeklebt sein können.

3. Tastatur nach Anspruch 2, **dadurch gekennzeichnet, daß** die Erhebungen (16) ballige Kuppen sind.

4. Tastatur nach einem der Ansprüche 1 bis 3, **dadurch gekennzeichnet, daß** Teil der Kennung Einbuchtungen (28) an der Betätigungsseite der Folie (14) sind, die geprägt sein können.

5. Tastatur nach einem der Ansprüche 1 bis 4, **dadurch gekennzeichnet, daß** den Erhebungen (16) oder Einbuchtungen (28) an der Betätigungsseite der Folie (14) Stößel (30) an der anderen Seite der Folie (14) gegenüberliegen, die geprägt, aufgegossen oder aufgeklebt sein können.

6. Tastatur nach einem der Ansprüche 1 bis 5, **dadurch gekennzeichnet, daß** sie mit einer Designfolie (24) versehen ist, die die Erhebungen (16) und/oder Einbuchtungen (28) und/oder Stößel (30) aufweist.

7. Tastatur nach einem der Ansprüche 1 bis 6, **dadurch gekennzeichnet, daß** Teil der Kennung wenigstens ein hardwaremäßig installierter Rückmeldungsgeber ist, der dem Anwender eine erfolgreiche Tastenbetätigung taktil und/oder optisch und/oder akustisch signalisiert.

8. Tastatur nach Anspruch 7, **dadurch gekennzeichnet, daß** die Intensität der taktilen und/oder optischen und/oder akustischen Rückmeldung frei programmierbar und für den Anwender unveränderlich fest programmiert ist.

9. Tastatur nach Anspruch 7 oder 8, **dadurch gekennzeichnet, daß** Teil des Rückmeldungsgebers eine Schnappscheibe ist.

10. Tastatur nach einem der Ansprüche 7 bis 9, **dadurch gekennzeichnet, daß** Teil des Rückmeldungsgebers ein Vibrationselement (18) ist.

11. Tastatur nach einem der Ansprüche 1 bis 10, **dadurch gekennzeichnet, daß** die Auswerteelektronik hinsichtlich der Zuordnung bestimmter Niederdrückstellen zu Positionssignalgaben auf einem Fingerpad frei programmierbar und für den Anwender unveränderlich fest programmiert ist.

12. Tastatur nach Anspruch 11, **dadurch gekennzeichnet, daß** die Auswerteelektronik hinsichtlich der Schaltschwelle, nämlich der Mindestniederdrückkraft für eine erfolgreiche Positionssignalgabe auf dem Fingerpad, ausgehend von einem konstruktiv vorgegebenen Minimum im Sinn einer Erhöhung der Schaltschwelle frei programmierbar und für den Anwender unveränderlich fest programmiert ist.

13. Tastatur nach einem der Ansprüche 1 bis 12, **dadurch gekennzeichnet, daß** die Folie (14) an der Innenseite elektrisch leitend ist und einem Kontaktiermedium mit Abstand gegenüberliegt.

14. Tastatur nach Anspruch 13, **dadurch gekennzeichnet, daß** das Kontaktiermedium eine Leiterplatte ist.

15. Tastatur nach Anspruch 13, **dadurch gekennzeichnet, daß** das Kontaktiermedium eine zweite elektrisch leitende Folie (10) ist.

16. Tastatur nach Anspruch 15, **gekennzeichnet durch** wenigstens einen Abstandshalter (12) zwischen den Folien (10, 14).

17. Tastatur nach Anspruch 15 oder 16, **dadurch gekennzeichnet, daß** wenigstens eine Folie (10, 14) transparent ist.

18. Tastatur nach einem der Ansprüche 15 bis 17, **dadurch gekennzeichnet, daß** wenigstens eine Folie (10, 14) opak ist.
